# EUROPEAN PATENT APPLICATION

(11) **EP 0 595 777 A2**
(43) Date of publication of application: **04.05.1994**
(21) Application number: 93830383.1
(22) Date of filing: 15.09.1993
(51) Int. Cl.: B32B 5/26, E04C 2/26

(54) **Enhanced thermal resistance antifire panel**

(30) Priority: 22.10.1992 IT MI920925 U
(71) Applicant: Navarra, Renzo, I-47023 Cesena (Forli) (IT); Pagliarani, Paolo, I-47037 Rimini (Forli) (IT)
(72) Inventor: Navarra, Renzo, I-47023 Cesena (Forli) (IT); Pagliarani, Paolo, I-47037 Rimini (Forli) (IT)
(74) Representative: Cicogna, Franco

(57) **Abstract**

The present invention relates to an antifire panel construction having enhanced thermal resistance properties, which has the main feature of comprising two trimmed metal plates (2,3), arranged parallel to one another and provided, on their opposite faces, with a respective mineral insulating material layer (4), there-between there is provided a flame self-estinguishing polyurethane foam (22).

## Description

### BACKGROUND OF THE INVENTION

The present invention relates to an antifire panel having enhanced thermal resistance characteristics.

There are already commercially available anti-fire panels which substantially comprise two metal material trimmed plates which are arranged facing one another with a parallel relationship.

Between these parallel plates there is injected a self extinguishing polyurethane foam for forming a flame barrier.

However, it has been found that the above disclosed arrangement has a comparatively small fire resistance, since the polyurethane foam, because of the heat being directly transmitted from the metal plates, has a flame resistance which is very small in the time, thereby, in several cases, such a panel is not suitable to pass any resistance tests.

Another drawback of the above mentioned panels is that the joining points where the panels are connected to one another constitute weak points of the construction since heat directly affects the inner part of the polyurethane material, thereby further increasing the flame resistance time.

### SUMMARY OF THE INVENTION

Accordingly, the aim of the present invention is to overcome the above mentioned drawbacks, by providing an antifire panel having enhanced thermal resistance characteristics, affording the possibility of greatly increasing the flame resistance time, by practically reducing the heat transmission coefficient between the outer metal plates or sheet metal elements and the foamed polyurethane inner part.

Within the scope of the above mentioned aim, a main object of the present invention is to provide such an antifire panel construction which affords the possibility of performing connecting joints suitable to provide a proper protection against heat propagation, thereby further increasing the fire or flame resistance time of the panel.

Another object of the present invention is to provide such an antifire panel, having enhanced thermal resistance characteristics, which is very reliable and safe in operation.

Yet another object of the present invention is to provide such a panel construction which can be easily made starting from easily available elements and materials and which, moreover, is very competitive from a mere economic standpoint.

According to one aspect of the present invention, the above mentioned aim and objects, as well as yet other objections, which will become more apparent hereinafter, are achieved by an enahnced thermal resistance antifire panel, characterized in that said panel comprises two trimmed metal plates parallel to one another and having, on their opposite faces, respective mineral insulating material layers therebetween there is provided a self-estinguishing polyurethane foam material.

### BRIEF DESCRIPTION OF THE DRAWINGS

Further characteristics and advantages of the invention will become more apparent hereinafter from the following detailed disclosure of an anti-fire panel having enhanced thermal resistance characteristics, which is shown, by way of an indicative, but not limitative example, in the accompanying drawings, where:
Figure 1 is a schematic cross-sectional view of two antifire panels according to the present invention arranged adjoining one another;
Figure 2 is a schematic perspective view of the panels;
Figure 3 is an exploded perspective view of the subject panels; and
Figure 4 is a schematic diagram illustrating the performance of the antifire panel according to the present invention.

### DESCRIPTION OF THE PREFERRED EMBODIMENTS

With reference to the number references of the above mentioned figures, the antifire panel having enhanced thermal resistance characteristics according to the present invention, which has been generally indicated at the reference number 1, comprises two metal plates, indicated respectively at 2 and 3, which are obtained from cold trimmed sheet metal elements obtained from a hot-galvanized steel band.

The plates or sheet metal elements 2 and 3 are parallel to one another and are provided, on their respective inner faces, with a respective mineral thermally insulating layer, indicated at 4, having any suitable thickness depending on the flame resistance to be obtained.

Into the inter-space between the mineral insulating material layers 4 there is injected a self estinguishing polyurethane foam material, indicated at the reference number 5, which practically fillsin the panels.

Thus, a panel construction is obtained having a greatly improved thermal resistance property, and this mainly because of the provision of the mineral insulating material providing a thermal barrier suitable to prevent the self estinguishing polyurethane foam material from being heated for a comparatively high time, thereby increasing the fire or flame resistance of the panel construction.

Moreover, the assembly between several panels is obtained by means of a joint element, generally indicated at the reference number 10, which is provided with a central body 11 engaging between the edges of the adjoining panels, and a pair of legs 12, superimposing on the plates of the mentioned adjoining panels.

Under the legs 12 there is provided a self estinguishing seal 13, whereas on the inner faces of the central body 11 there is provided a central insulating mineral material layer 15.

Moreover, on the outside of the assembly there is provided a snap covering element, indicated at the reference number 20, which snap engages in the loop portion defined by the central body 11 and being provided, on its inner face, with a thermally insulating mineral material strip 21, thereby a thermal barrier is also formed at the snap covering.

Moreover, into the space provided between the two adjoining joints there is injected an intermediate layer of a self-estinguishing polyurethane foam, indicated at 22.

The two joints are connected to one another by means of steel tie-rods, indicated at the reference number 30, which firmly connect to one another the joints, while operating as a further restraining element for holding the plates together.

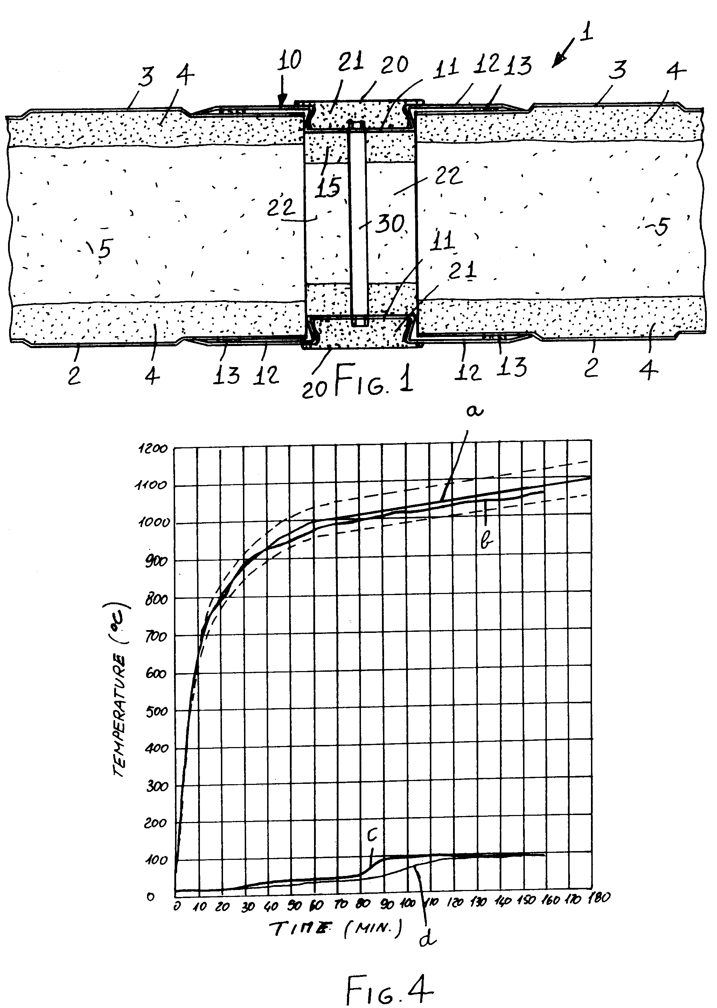

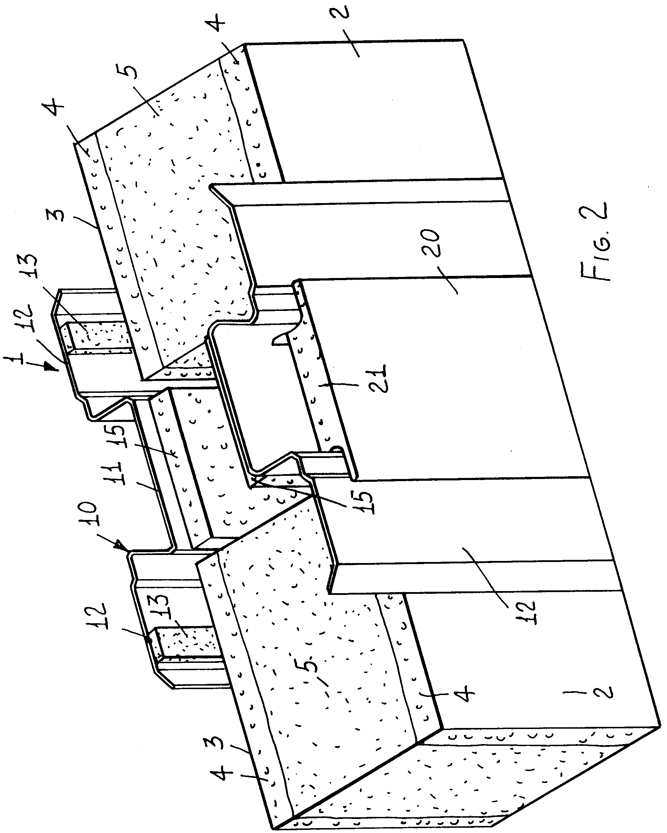

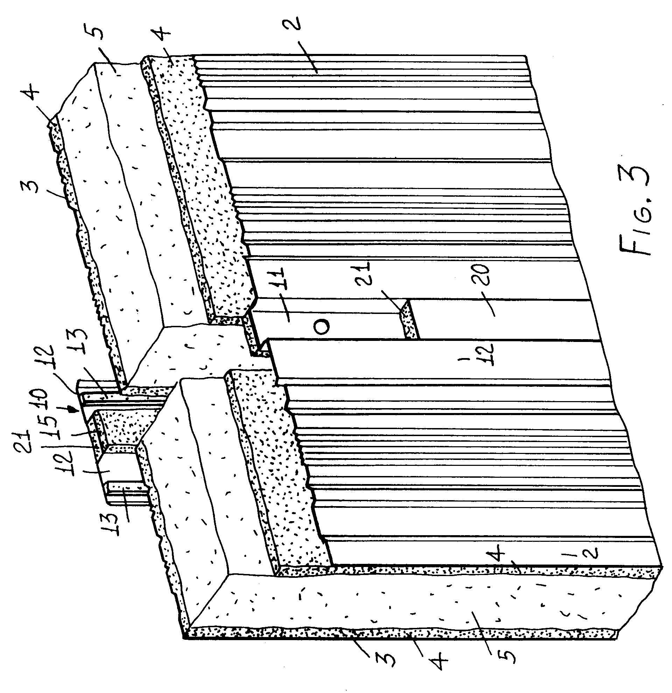

From experimental tests it has been found that the panel has a greatly increased thermal resistance, as is shown in the diagram of figure 4, where the curve "a" represents the theorical heating curve at the tolerance limit, the curve "b" represents an experimental curve derived from heating the panel in an oven, and the curves "c" and "d" represent, respectively, the maximum temperature of the panel un-exposed face and the middle temperature of said panel un-exposed face.

From the diagram it should be apparent that the panel flame resistance time is greatly increased, and it can easily reach a value of 180 minutes, as required by the most stringent standard requirements.

From the above disclosure it should be apparent that the invention fully achieves the intended aim and objects.

In particular, the fact is to be pointed out that the provision of the thermally insulating mineral material on the inner faces of the sheet metal elements allows to provide a very good barrier against heat propagation.

In practicing invention, though the best results have been obtained by the above mentioned materials, as well as the contingent size and shape can be any, according to requirements.

## Claims

1. An enhanced thermal resistance antifire panel, characterized in that said panel comprises two trimmed metal plates parallel to one another and having, on their opposite faces, respective mineral insulating material layers therebetween there is provided a self-estinguishing polyurethane foam material.

2. An antifire panel according to the preceding claim, characterized in that said panel comprises thermally insulating joints provided between adjoining panels.

3. An antifire panel according to the preceding claims, characterized in that the thermally insulating panels have a sheet metal body including a central portion engaging between edge portions of adjoining panels and two legs superimposing on the panel plates.

4. An antifire panel according to one or more of the preceding claims, characterized in that said antifire panel further comprises, on an inner face of the central body, an inner layer made of a mineral thermally insulating material.

5. An antifire panel, according to one or more of the preceding claims, characterized in that said panel further comprises a self-estinguishing seal arranged between the legs and the panel metal plates.

6. An antifire panel, according to one or more of the preceding claims, characterized in that said panel further comprises a self-estinguishing inner polyurethane foam layer, arranged between the inner layers of mineral thermally insulating material of said joints.

7. An antifire panel, according to one or more of the preceding claims, characterized in that said panel further comprises tie-rod elements connecting to one another said joints at said central body.

8. An antifire panel, according to one or more of the preceding claims, characterized in that said panel further comprises a covering element which can be snap engaged in a loop portion defined by said central body, on the inner face of said covering element there being provided a mineral thermally insulating material strip element.
